# FASCICULE DE BREVET EUROPEEN

(11) **EP 2 146 562 B1**
(45) Date de publication et mention de la délivrance du brevet: **24.10.2018**
(21) Numéro de dépôt: 09165529.0
(22) Date de dépôt: 15.07.2009
(51) Int. Cl.: H05K 5/02, G06F 21/83, G06F 21/86, H05K 1/02, H05K 1/14, G06K 7/00

(54) **Dispositif de protection d'un composant électronique**
Schutzvorrichtung einer elektronischen Komponente
Device for protecting an electronic component

(30) Priorité: 16.07.2008 FR 0854835
(43) Date de publication de la demande: 20.01.2010
(73) Titulaire: Ingenico Group, 75015 Paris (FR)
(72) Inventeur: Bonnet, Eric, 26120 Mallisard (FR); Eck, Alain, 26120 Montmeyran (FR); Hernandez, Vincent, 38780 Oytier St Oblas (FR)
(74) Mandataire: Cabinet Beaumont

(56) Documents cités:
- EP-A- 1 674 962
- WO-A-2008/145881
- DE-A1- 10 312 654
- FR-A- 2 806 507
- FR-A- 2 860 643
- FR-A- 2 901 896

## Description

### Domaine de l'invention

La présente invention concerne un dispositif de protection d'un composant électronique, par exemple un composant électronique fixé à un circuit imprimé, de façon à éviter que l'on ait accès audit composant électronique ou à des informations contenues dans ledit composant électronique.

### Exposé de l'art antérieur

Certains systèmes électroniques, par exemple un lecteur de carte à puce ou de carte magnétique, comprennent un circuit imprimé contenu dans un boîtier. Des composants électroniques peuvent être soudés sur les deux faces du circuit imprimé. Il s'agit, par exemple, d'un écran d'affichage, d'un connecteur pour liaison série, d'un connecteur destiné à être relié au réseau téléphonique, d'un connecteur de carte à mémoire, etc. On appelle face avant la face du circuit imprimé sur laquelle l'écran d'affichage est fixé et face arrière la face du circuit imprimé opposée à la face avant.

Les règles de sécurité édictées par les organismes d'agrément imposent généralement de prévoir des dispositifs de protection permettant d'empêcher l'accès à certains composants électroniques fixés au circuit imprimé. En particulier, pour certains composants électroniques fixés à la face arrière du circuit imprimé, les règles de sécurité peuvent imposer la présence de dispositifs de protection spécifiques pour ces composants. En effet, ces composants sont plus "sensibles" à des tentatives de fraude puisqu'un utilisateur qui manipule le système électronique fait généralement face à l'écran et peut ne pas s'apercevoir qu'une tentative de fraude a été réalisée en perçant le boîtier du côté de la face arrière du circuit imprimé.

Un exemple de dispositif de protection utilisé de façon classique pour protéger un composant électronique tel qu'un connecteur de carte à mémoire comprend une cage rigide, fixée au circuit imprimé, qui recouvre le connecteur tout en permettant un accès au connecteur pour l'introduction de cartes à mémoire. Les faces internes de la cage peuvent être recouvertes par un circuit souple de protection constitué de l'empilement de plusieurs films souples entre lesquels sont disposées des pistes conductrices connectées entre elles et formant au moins un circuit de sécurité. Le circuit de sécurité est connecté à ses extrémités à un système de traitement, prévu au niveau du circuit imprimé. Le système de traitement est adapté à détecter la rupture d'une piste conductrice du circuit de sécurité, ce qui peut correspondre à une tentative d'intrusion.

Les connexions entre la cage et le circuit imprimé peuvent être disposées entre le composant électronique protégé par la cage et le circuit imprimé de façon qu'elles ne soient pas accessibles. Un inconvénient est qu'il n'est alors pas possible de monter ou démonter la cage indépendamment du composant électronique. Toutefois, il peut être souhaitable, dans le cas où la cage ne fonctionne pas correctement, de pouvoir retirer la cage indépendamment du composant électronique pour la remplacer par une cage fonctionnant de façon convenable. Pour ce faire, les connexions entre la cage et le circuit imprimé peuvent être disposées à la périphérie de la cage de façon à pouvoir monter ou démonter la cage indépendamment du composant électronique. Toutefois, dans ce cas, les connexions entre la cage et le circuit imprimé peuvent être accessibles depuis l'extérieur de la cage. Un individu pourrait alors court-circuiter le circuit de sécurité de la cage par l'intermédiaire de ces connexions de façon à pouvoir retirer la cage sans que cela ne soit détecté par le système de traitement du circuit imprimé. Le composant électronique serait alors accessible.

Le document DE-A-103 12 654 décrit un système de protection dans lequel un capot recouvrant un circuit électronique est assemblé au circuit imprimé portant le circuit par des pions non conducteurs engagés dans des trous du circuit imprimé. Les documents WO 2008/145881, EP 1 674 962, FR 2 860 643, FR 2 901 896 et FR 2 806 507 portent sur des dispositifs de protection d'un système électronique.

### Résumé de l'invention

La présente invention vise un dispositif de protection d'un composant électronique, formant une cage recouvrant le composant électronique et comprenant un circuit de sécurité, permettant la détection d'un accès non autorisé aux connexions du circuit de sécurité tout en permettant un montage et un démontage de la cage séparément du composant électronique.

Un autre objet vise à obtenir un dispositif de protection particulièrement simple à réaliser et pouvant être réalisé à coût réduit.

Pour atteindre tout ou partie de ces objets ainsi que d'autres, un aspect de la présente invention prévoit un système électronique selon la revendication 1 comprenant un circuit imprimé comportant des première et deuxième faces opposées et au moins une ouverture traversante, un composant électronique fixé à la deuxième face et un premier dispositif de protection contre des tentatives d'accès du côté de la première face. Le système comprend un second dispositif de protection recouvrant, du côté de la deuxième face, au moins partiellement le composant électronique et comprenant au moins une patte s'étendant dans l'ouverture traversante et étant fixée au circuit imprimé. La patte comporte au moins une portion conductrice contactant électriquement au moins une première piste conductrice de la première face.

Selon un mode de réalisation de l'invention, la patte dépasse de l'ouverture du côté de la première face, est repliée contre la première face et est fixée à la première face à une extrémité.

Selon un mode de réalisation de l'invention, la patte est fixée aux parois de l'ouverture.

Selon un mode de réalisation de l'invention, le second dispositif de protection comprend au moins une première piste conductrice. Le circuit imprimé comprend au moins une seconde piste conductrice, la première piste conductrice étant connectée à la seconde piste conductrice au niveau de la patte.

Selon un mode de réalisation de l'invention, le second dispositif de protection comprend au moins un film souple comprenant des troisième et quatrième faces opposées, la troisième face étant orientée du côté du connecteur. La première piste conductrice est disposée sur la troisième face.

Selon un mode de réalisation de l'invention, le second dispositif de protection comprend une couche conductrice recouvrant la quatrième face.

Selon un mode de réalisation de l'invention, le premier dispositif de protection comprend un film souple supplémentaire recouvrant au moins partiellement la première face du circuit imprimé et au moins une troisième piste conductrice s'étendant sur le film souple supplémentaire au moins au niveau de la fixation entre la patte et le circuit imprimé, le circuit imprimé comprenant au moins une quatrième piste conductrice, la troisième piste conductrice étant connectée à la quatrième piste conductrice.

Selon un mode de réalisation de l'invention, le circuit imprimé est contenu dans un boîtier et le premier dispositif de protection comprend un élément mobile ou déformable comportant une première portion conductrice. Le circuit imprimé comprend des deuxième et troisième portions conductrices au moins partiellement en vis-à-vis de la première portion conductrice. L'élément mobile est adapté à être déplacé ou déformé entre une première position, en présence du boîtier, dans laquelle la première portion conductrice est en contact avec les deuxième et troisième portions conductrices et une seconde position, lorsque le boîtier est au moins partiellement ouvert, dans laquelle le contact entre la première portion conductrice et les deuxième et troisième portions conductrices est interrompu.

Selon un mode de réalisation de l'invention, le système est un terminal de paiement électronique.

Un autre aspect de la présente invention prévoit un procédé de fabrication d'un terminal de paiement tel que défini précédemment, comprenant les étapes consistant à former le second dispositif de protection, à fixer le composant électronique à la deuxième face du circuit imprimé, à placer le second dispositif de protection sur la deuxième face en introduisant la patte dans l'ouverture, le second dispositif de protection recouvrant au moins partiellement le composant électronique, à fixer la patte au circuit imprimé du côté de la première face et à placer le premier dispositif de protection du côté de la première face.

Selon un mode de réalisation de l'invention, l'étape de formation du second dispositif de protection est réalisée par pliage d'un circuit imprimé souple.

### Brève description des dessins

Ces objets, caractéristiques et avantages, ainsi que d'autres de la présente invention seront exposés en détail dans la description suivante d'exemples de réalisation particuliers faite à titre non-limitatif en relation avec les figures jointes parmi lesquelles :
la figure 1 est une vue en perspective d'un terminal de paiement selon un exemple de réalisation de l'invention ;
les figures 2 et 3 sont des vues en perspective de composants internes du terminal de paiement de la figure 1 ;
la figure 4 est une section partielle et schématique du terminal de paiement de la figure 1 ;
la figure 5 est une section de détail d'un dispositif de protection selon un exemple de réalisation de l'invention ;
les figures 6 à 8 illustrent des étapes successives du montage du dispositif de protection des figures 2 à 5 à un circuit imprimé ;
les figures 9 et 10 sont respectivement une section et une vue de dessus schématiques de la connexion d'un dispositif de protection selon un autre exemple de réalisation de l'invention à un circuit imprimé ; et
les figures 11 à 13 illustrent des étapes successives de réalisation d'une ouverture utilisée pour la connexion du dispositif de protection des figures 9 et 10 à un circuit imprimé.

### Description détaillée

Par souci de clarté, de mêmes éléments ont été désignés par de mêmes références aux différentes figures. De plus, seuls les éléments nécessaires à la compréhension de l'invention vont être décrits.

La présente invention consiste, pour un système électronique comprenant un circuit imprimé ayant des première et seconde faces opposées, des composants étant prévus sur la première face et étant protégés par un premier dispositif de protection et un second composant étant fixé à la seconde face et étant protégé par un second dispositif de protection correspondant à une cage, à réaliser les soudures de connexion de la cage au circuit imprimé, non pas du côté de la seconde face mais du côté de la première face. Pour ce faire, le circuit imprimé comprend des ouvertures traversantes permettant le passage d'au moins une portion de la cage. Les soudures de connexion de la cage étant réalisées du côté de la première face, elles bénéficient de la protection apportée par le premier dispositif de protection et sont donc difficilement accessibles à une personne non autorisée. En outre, la cage peut être montée et démontée indépendamment du composant électronique qu'elle protège.

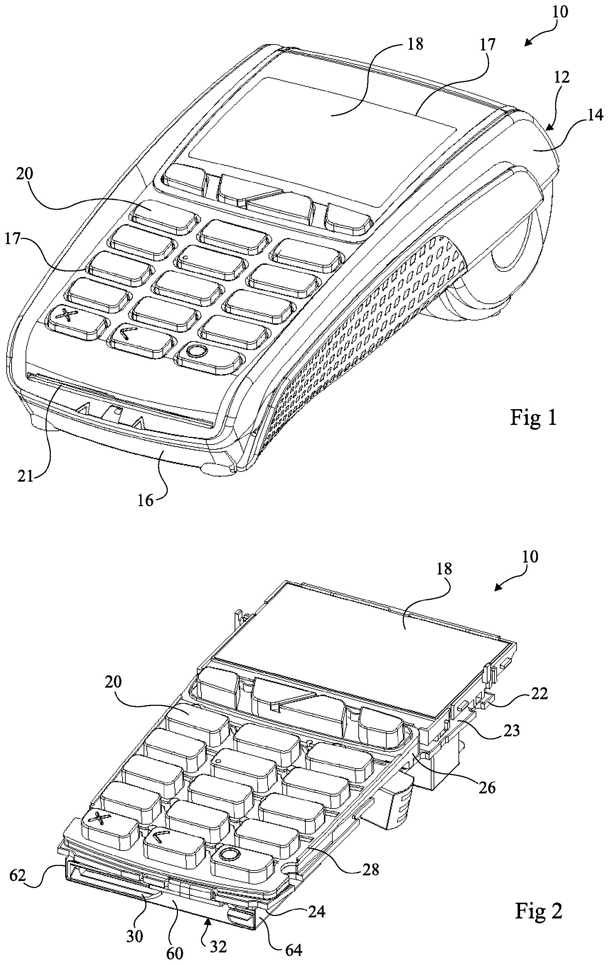

La figure 1 représente, de façon schématique, un exemple de réalisation d'un système électronique 10, par exemple un terminal de paiement électronique. Le terminal 10 comprend un boîtier 12 constitué d'une portion supérieure de boîtier 14 reliée à une portion inférieure de boîtier 16. Des ouvertures 17 sont prévues au niveau de la portion supérieure de boîtier 14 pour un écran d'affichage 18 et des touches 20 appartenant, par exemple, à un clavier. En outre, une ouverture 21 est prévue dans le boîtier 12 pour permettre l'introduction de cartes, par exemple des cartes bancaires.

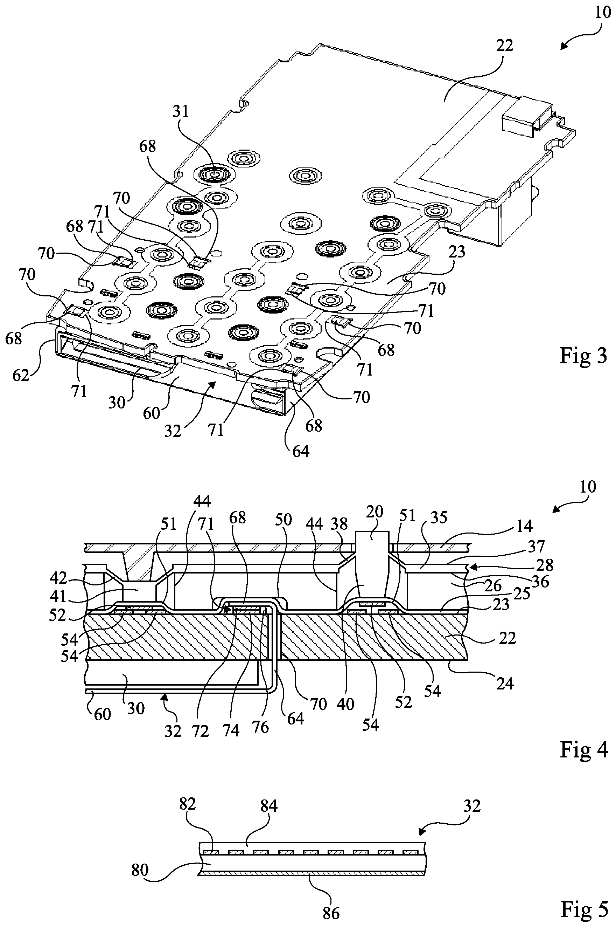

Les figures 2 et 3 sont des vues en perspective de composants internes du terminal de paiement de la figure 1, certains composants représentés en figure 2 n'étant pas représentés en figure 3. La figure 4 est une section partielle et schématique du terminal 10.

Le terminal 10 comprend un circuit imprimé 22 sur lequel sont connectés des composants électroniques. Le circuit imprimé 22 comprend deux faces opposées 23, 24. La face 23 est partiellement recouverte d'un circuit souple de protection 25, lui-même recouvert d'une entretoise 26. L'écran 18 est positionné du côté de la face 23. L'entretoise 26 est recouverte d'une membrane souple 28 formant un clavier, au niveau de laquelle sont formées les touches 20. En figure 3, l'écran 18, l'entretoise 26, le circuit de protection 25 et la membrane 28 ne sont pas représentés.

Le circuit imprimé 22 comprend du côté de la face 23 des pistes conductrices 31 par exemple en cuivre. En figure 3, on a seulement représenté les pistes conductrices par des ellipses 31, formant notamment des interrupteurs. Un interrupteur correspond, par exemple, aux extrémités distinctes de deux pistes conductrices. Les extrémités des pistes formant un interrupteur peuvent avoir la forme de peignes entrelacés ou, comme cela est représenté en figure 3, la forme de deux anneaux concentriques.

Un connecteur 30 à cartes à puces, ou carte à mémoire, est fixé à la face 24 du circuit imprimé 22. Le connecteur 30 est disposé le long d'un bord du circuit imprimé 22 en vis-à-vis de l'ouverture 21. Un dispositif de protection 32, correspondant à une cage, recouvre le connecteur 30 et est fixé au circuit imprimé 22.

Le circuit de protection souple 25 peut comprendre plusieurs films souples entre lesquels sont disposées des pistes conductrices connectées entre elles et formant au moins un circuit de sécurité. Le circuit de sécurité est connecté à ses extrémités à un circuit de traitement, prévu au niveau du circuit imprimé 22. Le circuit de traitement est adapté à détecter la rupture d'une piste conductrice du circuit de sécurité du circuit de protection 25, ce qui peut correspondre à un accès non autorisé. La détection d'un accès non autorisé peut entraîner l'arrêt du terminal de paiement 10, l'effacement de données sensibles stockées dans le terminal de paiement 10, etc.

La membrane clavier 28, par exemple en silicone ou en polyuréthane, comprend une base 35 ayant une face 36 reposant sur l'entretoise 26 et une face 37 orientée du côté de la portion supérieure de boîtier 14. Chaque touche 20 a une forme sensiblement parallélépipédique et est reliée à la base 35 par une lèvre périphérique amincie 38. En outre, chaque touche 20 se prolonge du côté de la face 36 par un pion 40 qui se projette sensiblement perpendiculairement au plan de la base 35. La membrane clavier 28 peut, en outre, comprendre des touches factices 41, une seule touche factice 41 étant représentée en figure 4. Chaque touche factice 41 est reliée à la base 35 par une lèvre périphérique amincie 42. L'entretoise 26 est traversée par des ouvertures 44 destinées à recevoir les pions 40 et les touches factices 41. L'entretoise 26 comprend des évidements 50 non traversants du côté de la face 23 du circuit imprimé 22. Le circuit de protection souple 25 comprend, au niveau de chaque ouverture 44, une portion déformable 51. Chaque portion déformable 51 comprend, du côté du circuit imprimé 22, une portion conductrice 52, par exemple une région métallique. Sur le circuit imprimé 22, sous chaque portion conductrice 52, sont disposées en vis-à-vis deux extrémités appartenant chacune à une piste métallique 54.

En l'absence d'action extérieure sur le clavier, chaque touche 20 est éloignée du plan médian de la base 35 et se trouve à distance du circuit imprimé 22. De ce fait, la portion déformable 51 associée du circuit de protection 25 adopte une configuration dans laquelle la portion conductrice 52 est à distance des pistes métalliques 54. Lorsqu'un utilisateur exerce une pression sur une touche 20, la lèvre 38 associée permet un déplacement de la touche 20 qui déforme la portion déformable 51 jusqu'à ce que la portion conductrice 52 entre en contact avec les extrémités des pistes métalliques 54 sous-jacentes, établissant alors un contact électrique entre les deux pistes métalliques 54. La touche 20, la portion déformable 51 et la portion conductrice 52 associées jouent donc le rôle d'un interrupteur qui est normalement ouvert et qui est fermé lorsqu'un utilisateur appuie sur la touche 20.

Les touches factices 41 prévues au niveau du clavier, ne sont pas visibles depuis l'extérieur du boîtier 12 et forment, avec la portion déformable 51 et la portion conductrice 52 associées, un dispositif de protection. La portion conductrice 52 et les pistes conductrices 54 associées à une touche factice 41 forment un circuit de sécurité relié à un circuit de traitement non représenté.

Lorsque la portion supérieure de boîtier 14 est fixée à la portion inférieure de boîtier 16, la touche factice 41 est sollicitée en permanence par la portion supérieure de boîtier 14 de façon à venir en appui contre la portion déformable 51 associée du circuit de protection 25. Dans ce cas, la portion conductrice 52 associée à la touche factice 41 vient en contact avec les extrémités des deux pistes 54 sous-jacentes. La connexion électrique entre les deux pistes conductrices 54 est détectée par le circuit de traitement.

Lorsqu'un individu tente d'accéder au contenu du boîtier 12 en retirant la portion supérieure de boîtier 14, la touche factice 41 n'est plus sollicitée par la portion supérieure de boîtier 14 et est ramenée par l'action de la lèvre 42 vers une position de repos à distance du circuit imprimé 22. La portion déformable 51 associée adopte alors une configuration dans laquelle la portion conductrice 52 est à distance des pistes conductrices 54 sous-jacentes. Le circuit de traitement est adapté à détecter une modification d'état du circuit de sécurité, indiquant qu'une ouverture du terminal 10 a lieu. La touche factice 41, la portion déformable 51 et la portion conductrice 52 associées jouent donc le rôle d'un interrupteur qui est fermé lorsque la portion supérieure de boîtier 14 est dans une position normale et qui est ouvert lorsque la portion supérieure de boîtier 14 est retirée. La détection d'une ouverture du terminal peut entraîner l'arrêt du terminal de paiement 10, l'effacement de données sensibles stockées dans le terminal de paiement 10, etc.

La cage 32 comprend une paroi de fond 60, plane et de forme générale rectangulaire, et trois parois latérales 62, 64, 66, planes et de forme générale rectangulaire, et sensiblement perpendiculaires à la paroi de fond 60, seules les parois latérales 62 et 64 étant visibles aux figures 2 à 4. Chaque paroi latérale 62, 64 et 66 comprend deux pattes 68 qui s'étendent au travers d'ouvertures 70 traversant le circuit imprimé 22. Les ouvertures 70 correspondent, par exemple, à des trous oblongs ayant une largeur de l'ordre de 0,8 mm. Les pattes 68 sont rabattues sur la face 23 du circuit imprimé 22 à laquelle elles sont fixées par des soudures 71. Comme cela est visible en figure 4, chaque patte 68 comprend à son extrémité une portion conductrice 72, par exemple en cuivre, fixée à une portion conductrice 74 prévue sur la face 23 du circuit imprimé 22 par une portion 76 d'un matériau de soudure, par exemple de la pâte à braser. Le circuit de protection souple 25 recouvre chaque portion de patte 68 rabattue sur la face 23 du circuit imprimé 22.

La figure 5 représente une section des parois 60, 62, 64, 66 de la cage 32. La cage 32 est formée à partir d'un circuit imprimé souple ayant, par exemple, une épaisseur de l'ordre de 0,2 mm. Le circuit souple est constitué d'une âme mince souple 80, par exemple en polyimide, sur une face de laquelle sont réparties une ou plusieurs pistes conductrices 82, par exemple en cuivre. Les pistes conductrices 82 s'étendent en zigzagant sur la totalité de la paroi de fond 60 et des parois latérales 62, 64, 66. L'âme mince souple 80 est recouverte d'une couche 84 de vernis isolant du côté des pistes conductrices 82. Une couche conductrice 86, par exemple en cuivre, est prévue sur la face de l'âme 80 opposée aux pistes conductrices 82. La ou les pistes conductrices 82 sont reliées à un système de traitement prévu au niveau du circuit imprimé 22. Pour ce faire, chaque piste conductrice 82 est reliée à ses extrémités à des portions conductrices 72 disposées à l'extrémité de pattes 68 assurant ainsi la connexion électrique de la piste conductrice 82 au circuit imprimé 22. Le circuit de protection souple 25 peut avoir une structure analogue à celle représentée en figure 5, la couche conductrice 86 pouvant ne pas être présente.

Lorsque la cage 32 est connectée au circuit imprimé 22, la ou les pistes conductrices 82 forment un circuit de sécurité connecté à ses extrémités au système de traitement prévu au niveau du circuit imprimé 22. Le système de traitement est adapté à détecter une interruption des pistes conductrices 82, ce qui peut correspondre à un accès non autorisé au connecteur 30. A titre d'exemple, une interruption des pistes conductrices 82 se produit lors d'une tentative de retrait de la cage 32 ou de perçage de celle-ci. La détection d'un accès non autorisé peut entraîner l'arrêt du terminal de paiement 10, l'effacement de données sensibles stockées dans le terminal de paiement 10, etc.

En fonctionnement, les soudures de connexion 71 entre les pattes 68 et le circuit imprimé 22 étant situées du côté de la face 23, elles sont protégées à la fois par le circuit de protection souple 25 et par le dispositif de protection associé à la membrane 28 constitué des touches factices 41. Un accès non autorisé aux soudures 71 est donc détecté par l'intermédiaire des touches factices 41 de la membrane 28 et/ou par l'intermédiaire du circuit de protection souple 25. En outre, la couche conductrice 86 étant une couche opaque, elle empêche un individu de deviner, par transparence, la position des pistes conductrices 82 sur les parois 60, 62, 64, 66 de la cage 32. La couche conductrice 86 peut, en outre, servir de blindage de protection du connecteur 30 contre les perturbations électromagnétiques.

La présente invention permet, en outre, de faciliter les opérations de maintenance. En effet, les pattes 68 peuvent être dessoudées du circuit imprimé 22 pour retirer la cage 32 sans nécessiter le retrait du connecteur 30.

A titre de variante, le circuit de protection 25 peut ne pas être présent. Les portions conductrices 52 peuvent alors être prévues directement sur le pion 40 et la touche factice 41. Les soudures de connexion 71 entre les pattes 68 et le circuit imprimé 22 sont alors seulement protégées par le dispositif de protection associé à la membrane 28 et constitué des touches factices 41. Selon une autre variante, les touches factices 41 ne sont pas présentes. Les soudures de connexion 71 entre les pattes 68 et le circuit imprimé 22 sont alors seulement protégées par le circuit de protection souple 25.

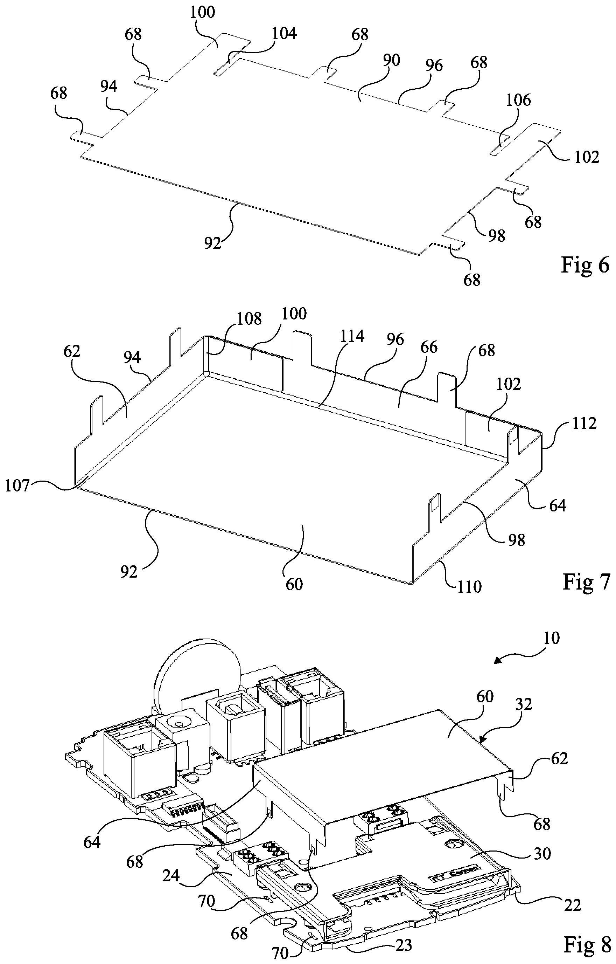

Les figures 6 à 8 sont des vues en perspective illustrant des étapes successives d'un exemple de procédé de montage du dispositif de protection 32 sur le circuit imprimé 22.

La figure 6 représente un exemple de circuit imprimé souple 90 plan utilisé pour former la cage 32. Le circuit imprimé souple 90 a la forme générale d'un rectangle comprenant quatre bords 92, 94, 96, 98. Sur chaque bord 94, 96, 98 se projettent les deux pattes 68. Le bord 92 ne comprend pas de patte 68. Le circuit 90 comprend, en outre, au niveau des deux coins joignant les bords 94, 98 au bord 96, deux portions 100, 102 se prolongeant au-delà du bord 96. En outre, deux ouvertures 104, 106 sont prévues dans le circuit imprimé souple 90 et s'étendent depuis le bord 96 parallèlement aux bords 94 et 98 pour délimiter les portions 100, 102.

La figure 7 représente la cage 32 formée par pliage du circuit imprimé souple 90. Une première pliure 107 est formée parallèlement au bord 94 dans le prolongement de l'ouverture 104. Une seconde pliure 108 est formée perpendiculairement au bord 94 à l'extrémité de l'ouverture 104. Les pliures 107 et 108 délimitent la paroi latérale 62. Une troisième pliure 110 est formée parallèlement au bord 98 dans le prolongement de l'ouverture 106. Une quatrième pliure 112 est formée perpendiculairement au bord 98 à l'extrémité de l'ouverture 106. Les pliures 110 et 112 délimitent la paroi latérale 64. Une cinquième pliure 114 est formée parallèlement au bord 96 et relie les extrémités des ouvertures 104 et 106. La pliure 114 délimite la paroi latérale 66. Les pliures 107, 110 et 114 délimitent la paroi de fond 60. Les portions 100, 102 sont collées à la paroi de fond 66 et sont situées du côté de la paroi de fond 66 orienté vers l'intérieur de la cage 32. Les portions 100, 102 assurent la fermeture de la cage 32 au niveau des bords communs entre les parois 62, 64, 66.

A titre de variante, les portions 100, 102 se prolongent par des doigts qui épousent partiellement la forme des pattes 68 de la paroi 66. Les doigts pénètrent dans des ouvertures 70 lors du montage de la cage 32 sur le circuit imprimé 22. Ces doigts rendent plus difficile une tentative d'intrusion qui consisterait à retirer les portions 100, 102 pour accéder au connecteur 30 par le bord commun, ainsi libéré, entre les parois 62, 64 et la paroi 66.

Selon une autre variante, les portions 100 et 102 sont des prolongements de la paroi 66 repliés sur les parois 62 et 64.

Par ailleurs, un élément raidisseur peut être ajouté contre la paroi 66.

La figure 8 est une vue de dessous du circuit imprimé 22, la cage 32 n'étant pas encore montée sur celui-ci. De la pâte à braser est répartie sur la face 23 du circuit imprimé 22 aux emplacements où les pattes 68 doivent être soudées au circuit imprimé 22, c'est-à-dire au niveau des portions conductrices 74 (figure 4). Le montage de la cage 32 sur le circuit imprimé 22 est réalisé en introduisant les pattes 68 dans les ouvertures 70 correspondantes prévues au niveau du circuit imprimé 22. Ceci permet d'assurer un positionnement correct du dispositif de protection 32 par rapport au circuit imprimé 22. Les pattes 68 sont alors repliées sur la face 23 du circuit imprimé 22, les portions conductrices 72 aux extrémités des pattes 68 venant au contact de la pâte à braser. Le dispositif de protection 32 est alors soudé manuellement ou de façon automatique au circuit imprimé 22 en chauffant localement les extrémités des pattes 68 pour faire fondre les portions de pâte à braser. A titre d'exemple, le chauffage des extrémités des pattes 68 est réalisé par un fer à souder. Dans ce cas, on peut prévoir, sur la face de chaque patte 68 opposée à la portion conductrice 72, une portion conductrice, par exemple en cuivre, sur laquelle est appliqué le fer à souder de façon à améliorer le transfert de chaleur à la pâte à braser.

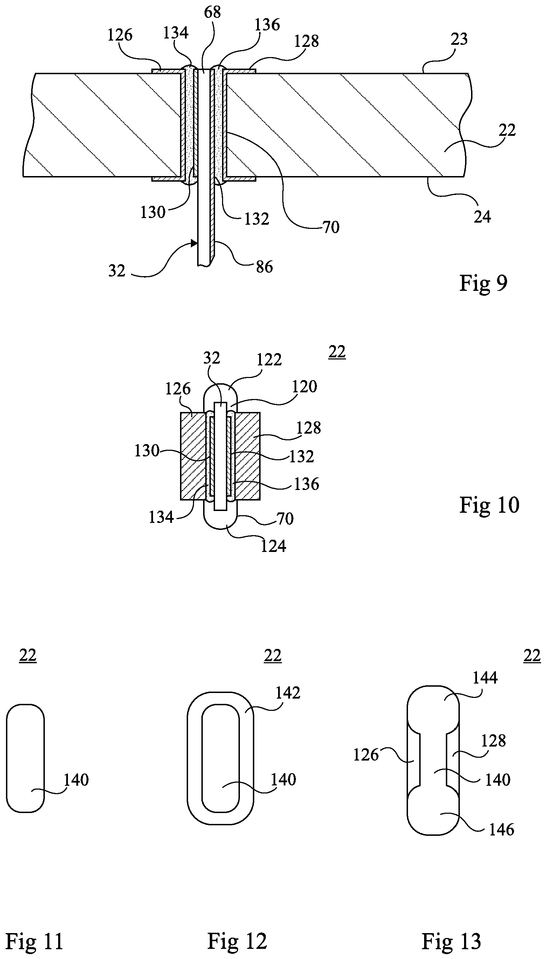

Les figures 9 et 10 sont respectivement une coupe schématique et une vue schématique de dessus du dispositif de protection 32 selon un autre exemple de réalisation de l'invention au niveau de la liaison entre le dispositif de protection 32 et le circuit imprimé 22. Le dispositif de protection 32 est représenté de façon simplifiée sur cette figure. En particulier, les pistes conductrices 82 ne sont pas représentées. Dans le présent exemple de réalisation, chaque patte 68 du dispositif de protection pénètre dans l'ouverture 70 correspondante mais ne dépasse pas ou peu du côté de la face 23 du circuit imprimé 22.

Comme cela apparaît plus clairement sur la vue de dessus, l'ouverture 70 comprend une région centrale allongée 120 et deux régions d'extrémité 122, 124. Des portions conductrices 126, 128, par exemple en cuivre, s'étendent sur les parois opposées de la région centrale 120 de l'ouverture et se prolongent du côté des faces 23 et 24 du circuit imprimé 22. Il n'y a pas de portion métallique dans l'ouverture 70 au niveau des régions d'extrémité 122, 124. La patte 68 de la cage 32 comprend des portions conductrices 130, 132 sur chaque face. La portion conductrice 130 peut être reliée aux portions conductrices 82 de la cage 32 et la portion conductrice 132 peut être reliée à la couche conductrice 86. Une portion 134 d'un matériau conducteur, par exemple une pâte à braser, est disposée entre les portions conductrices 126 et 130. Une autre portion 136 du matériau conducteur est disposée entre les portions conductrices 128 et 132. La portion de pâte à braser 134 assure une liaison électrique entre les portions conductrices 126 et 130 et la portion de pâte à braser 136 assure une liaison électrique entre les portions conductrices 128 et 132. Les portions de pâte à braser 134, 136 sont disjointes de sorte qu'il n'y a pas de liaison électrique entre les portions conductrices 130 et 132. Les portions 134, 136 de pâte à braser assurent, en outre, le maintien en position de la patte 68. A titre de variante, la patte 68 peut être repliée dans l'ouverture 70.

Les figures 11 à 13 sont des vues de dessus du circuit imprimé 22 à des étapes successives de la formation de l'ouverture 70.

La figure 11 représente le circuit imprimé 22 après avoir percé une ouverture oblongue 140 traversant le circuit imprimé 22.

Le figure 12 représente le circuit imprimé 22 après avoir recouvert l'ensemble des parois de l'ouverture 140 d'une couche conductrice 142, par exemple en cuivre. La couche conductrice 142 s'étend dans l'ouverture 140 et sur les faces 23 et 24 du circuit imprimé 22 sur toute la périphérie de l'ouverture 140.

La figure 13 représente le circuit imprimé 22 après avoir percé deux ouvertures 144, 146, par exemple circulaires, aux extrémités de l'ouverture oblongue 140. Le perçage des ouvertures 144, 146 délimite les deux portions conductrices 126 et 128.

Bien entendu, la présente invention est susceptible de diverses variantes et modifications qui apparaîtront à l'homme de l'art. En particulier, bien que, dans les exemples de réalisation décrits précédemment, la cage 32 soit constituée de quatre parois, il est clair que la cage 32 peut être constituée d'un nombre de parois différent. En outre, bien que dans les exemples de réalisation décrits précédemment, la cage 32 soit formée par pliage d'un circuit imprimé souple, la cage 32 pourrait être réalisée par emboutissage d'un circuit imprimé souple, ou par tout autre procédé permettant de réaliser un circuit imprimé en trois dimensions.

## Revendications

1. Système électronique (10) comprenant :
un circuit imprimé (22) comportant des première et deuxième faces opposées (23, 24) et au moins une ouverture traversante (70) ;
un composant électronique (30) fixé à la deuxième face ;
un premier dispositif de protection (25, 41) contre des tentatives d'accès du côté de la première face ; et
un second dispositif de protection (32) recouvrant, du côté de la deuxième face, au moins partiellement le composant électronique et comprenant au moins une patte (68) s'étendant dans l'ouverture traversante et étant fixée au circuit imprimé,
**caractérisé en ce que** ladite patte comportant au moins une portion conductrice contactant électriquement au moins une première piste conductrice (74) de la première face, **en ce que** le second dispositif de protection (32) comprend au moins une seconde piste conductrice (72, 82), le circuit imprimé (22) comprenant au moins une première piste conductrice (74), la première piste conductrice étant connectée à la seconde piste conductrice au niveau de la patte (68) et **en ce que** le premier dispositif de protection (25) comprend un film souple recouvrant au moins partiellement la première face (23) du circuit imprimé (22) et au moins une troisième piste conductrice s'étendant sur le film souple au moins au niveau de la fixation entre la patte (68) et le circuit imprimé, le circuit imprimé comprenant au moins une quatrième piste conductrice, la troisième piste conductrice étant connectée à la quatrième piste conductrice.

2. Système selon la revendication 1, dans lequel la patte (68) dépasse de l'ouverture (70) du côté de la première face (23), est repliée contre la première face et est fixée à la première face à une extrémité.

3. Système selon la revendication 1, dans lequel la patte (68) est fixée aux parois de l'ouverture (70).

4. Système selon l'une quelconque des revendications 1 à 3, dans lequel le second dispositif de protection (32) comprend au moins un film souple (80) supplémentaire comprenant des troisième et quatrième faces opposées, la troisième face étant orientée du côté du composant électronique (30), la seconde piste conductrice (82) étant disposée sur la troisième face.

5. Système selon la revendication 4, dans lequel le second dispositif de protection (32) comprend une couche conductrice (86) recouvrant la quatrième face.

6. Système selon l'une quelconque des revendications 1 à 5, dans lequel le circuit imprimé (22) est contenu dans un boîtier (12) et dans lequel le premier dispositif de protection (25, 41) comprend un élément mobile ou déformable (51) comportant une première portion conductrice (52), le circuit imprimé (22) comprenant des deuxième et troisième portions conductrices (54) au moins partiellement en vis-à-vis de la première portion conductrice, l'élément mobile étant adapté à être déplacé ou déformé entre une première position, en présence du boîtier, dans laquelle la première portion conductrice est en contact avec les deuxième et troisième portions conductrices et une seconde position, lorsque le boîtier est au moins partiellement ouvert, dans laquelle le contact entre la première portion conductrice et les deuxième et troisième portions conductrices est interrompu .

7. Système selon l'une quelconque des revendications 1 à 6, dans lequel le système est un terminal de paiement électronique (10) .

8. Procédé de fabrication d'un système électronique (10) selon l'une quelconque des revendications 1 à 7, comprenant les étapes suivantes :
former le second dispositif de protection (32) ;
fixer le composant électronique (30) à la deuxième face (24) du circuit imprimé (32) ;
placer le second dispositif de protection sur la deuxième face en introduisant la patte (68) dans l'ouverture (70), le second dispositif de protection recouvrant au moins partiellement le composant électronique ;
fixer la patte au circuit imprimé du côté de la première face (23) ; et
placer le premier dispositif de protection (25, 41) du côté de la première face.

9. Procédé selon la revendication 8, dans lequel l'étape de formation du second dispositif de protection (32) est réalisée par pliage d'un circuit imprimé souple.

## Patentansprüche

1. Elektronisches System (10), welches Folgendes aufweist:
eine gedruckte Leiterplatte (22) mit ersten und zweiten gegenüberliegenden Oberflächen (23, 24) und mindestens einer Durchgangsöffnung (70);
eine elektronische Komponente (30), die an der zweiten Oberfläche angebracht ist;
eine erste Schutzvorrichtung (25, 41) gegen Zugriffsversuche auf die Seite der ersten Oberfläche; und
eine zweite Schutzvorrichtung (32), welche die elektronische Komponente auf der Seite der zweiten Oberfläche zumindest teilweise bedeckt und
mindestens eine Lasche (68) aufweist, die sich in die Durchgangsöffnung erstreckt und an der gedruckten Leiterplatte angebracht ist;
**dadurch gekennzeichnet, dass** die Lasche zumindest einen leitenden Teil aufweist, der elektrisch in Kontakt mit mindestens einer ersten Leiterbahn (74) auf der ersten Oberfläche ist, dass die zweite Schutzvorrichtung (32) zumindest eine zweite Leiterbahn (72, 82) aufweist, wobei die gedruckte Leiterplatte (22) zumindest eine erste Leiterbahn (74) aufweist, wobei die erste Leiterbahn mit der zweiten Leiterbahn auf dem Niveau der Lasche (68) verbunden ist, und dadurch, dass die erste Schutzvorrichtung (25) einen flexiblen Film aufweist, der zumindest teilweise die erste Oberfläche (23) der gedruckten Leiterplatte (22) bedeckt, und wobei zumindest eine dritte Leiterbahn sich auf dem flexiblen Film zumindest auf dem Niveau der Befestigung zwischen der Lasche (68) und der gedruckten Leiterplatte erstreckt, wobei die gedruckte Leiterplatte zumindest eine vierte Leiterbahn aufweist, wobei die dritte Leiterbahn mit der vierten Leiterbahn verbunden ist.

2. System nach Anspruch 1, wobei die Lasche (68) von der Öffnung (70) auf der Seite der ersten Oberfläche (23) vorsteht, auf die erste Oberfläche zurückgebogen ist und an der ersten Oberfläche an einem Ende befestigt ist.

3. System nach Anspruch 1, wobei die Lasche (68) an den Wänden der Öffnung (70) angebracht ist.

4. System nach einem der Ansprüche 1 bis 3, wobei die zweite Schutzvorrichtung (32) zumindest einen zusätzlichen flexiblen Film (80) aufweist, der dritte und vierte gegenüberliegende Oberflächen aufweist, wobei die dritte Oberfläche zu dem Verbinder (30) orientiert ist, wobei die zweite Leiterbahn (82) an der dritten Oberfläche angeordnet ist.

5. System nach Anspruch 4, wobei die zweite Schutzvorrichtung (32) eine leitende Schicht (86) aufweist, welche die vierte Oberfläche bedeckt.

6. System nach einem der Ansprüche 1 bis 5, wobei die gedruckte Leiterplatte (22) in einer Packung (12) enthalten ist, und wobei die erste Schutzvorrichtung (25, 41) ein mobiles oder verformbares Element (51) aufweist, welches einen ersten leitenden Teil (52) aufweist, wobei die gedruckte Leiterplatte (22) zweite und dritte leitende Teile (54) aufweist, die zumindest teilweise zu dem ersten leitenden Teil weisen, wobei das mobile Element zwischen einer ersten Position, in Anwesenheit der Packung, in welcher der erste leitende Teil in Kontakt mit den zweiten und dritten leitenden Teilen ist, und einer zweiten Position, wenn die Packung zumindest teilweise offen ist, in welcher der Kontakt zwischen dem ersten leitenden Teil und den zweiten und dritten leitenden Teilen unterbrochen ist, bewegt oder verformt werden kann.

7. System nach einem der Ansprüche 1 bis 6, wobei das System ein Endgerät (10) für elektronische Bezahlung ist.

8. Verfahren zur Herstellung eines elektronischen Systems (10) nach einem der Ansprüche 1 bis 7, welches folgende Schritte aufweist:
Formen der zweiten Schutzvorrichtung (32);
Anbringen der elektronischen Komponente (30) an der zweiten Oberfläche (24) der gedruckten Leiterplatte (32);
Anordnen der zweiten Schutzvorrichtung auf der zweiten Oberfläche durch Einführen der Lasche (68) in die Öffnung (70), wobei die zweite Schutzvorrichtung zumindest teilweise die elektronische Komponente bedeckt;
Anbringen der Lasche an der gedruckten Leiterplatte auf der Seite der ersten Oberfläche (23); und
Anordnen der ersten Schutzvorrichtung (25, 41) auf der Seite der ersten Oberfläche.

9. Verfahren nach Anspruch 8, wobei der Schritt des Formens der zweiten Schutzvorrichtung (32) durch Falten einer flexiblen gedruckten Leiterplatte ausgeführt wird.

## Claims

1. An electronic system (10) comprising:
a printed circuit (22) having first and second opposite surfaces (23, 24) and at least one through opening (70);
an electronic component (30) attached to the second surface;
a first device of protection (25, 41) against access attempts on the first surface side; and
a second protection device (32) at least partially covering, on the second surface side, the electronic component, and comprising at least one tab (68) extending in the through opening and attached to the printed circuit,
**characterized in that** said tab comprises at least one conductive portion electrically contacting at least one first conductive track (74) of the first surface, **in that** the second protection device (32) comprises at least one second conductive track (72, 82), the printed circuit (22) comprising at least one first conductive track (74), the first conductive track being connected to the second conductive track at the level of the tab (68) and **in that** the first protection device (25) comprises an flexible film at least partially covering the first surface (23) of the printed circuit (22) and at least one third conductive track extending on the flexible film at least at the level of the mounting between the tab (68) and the printed circuit, the printed circuit comprising at least one fourth conductive track, the third conductive track being connected to the fourth conductive track.

2. The system of claim 1, wherein the tab (68) protrudes from the opening (70) on the side of the first surface (23), is folded back against the first surface and is attached to the first surface at one end.

3. The system of claim 1, wherein the tab (68) is attached to the walls of the opening (70).

4. The system of any of claims 1 to 3, wherein the second protection device (32) comprises at least one additional flexible film (80) comprising third and fourth opposite surfaces, the third surface being oriented towards the connector (30), the second conductive track (82) being arranged on the third surface.

5. The system of claim 4, wherein the second protection device (32) comprises a conductive layer (86) covering the fourth surface.

6. The system of any of claims 1 to 5, wherein the printed circuit (22) is contained in a package (12) and wherein the first protection device (25, 41) comprises a mobile or deformable element (51) comprising a first conductive portion (52), the printed circuit (22) comprising second and third conductive portions (54) at least partially facing the first conductive portion, the mobile element being capable of being moved or deformed between a first position, in the presence of the package, in which the first conductive portion is in contact with the second and third conductive portions and a second position, when the package is at least partially open, in which the contact between the first conductive portion and the second and third conductive portions is interrupted.

7. The system of any of claims 1 to 6, wherein the system is an electronic payment terminal (10).

8. A method for manufacturing the electronic system (10) of any of claims 1 to 7, comprising the steps of:
forming the second protection device (32);
attaching the electronic component (30) to the second surface (24) of the printed circuit (32);
placing the second protection device on the second surface by introducing the tab (68) into the opening (70), the second protection device at least partially covering the electronic component;
attaching the tab to the printed circuit on the side of the first surface (23); and
placing the first protection device (25, 41) on the first surface side.

9. The method of claim 8, wherein the step of forming the second protection device (32) is carried out by folding of a flexible printed circuit.
